# EUROPÄISCHE PATENTSCHRIFT

(11) **EP 4 640 426 B1**
(45) Veröffentlichungstag und Bekanntmachung des Hinweises auf die Patenterteilung: **04.03.2026**
(21) Anmeldenummer: 24172394.9
(22) Anmeldetag: 25.04.2024
(51) Int. Cl.: B32B 7/09, F02B 77/11, B32B 5/02, B32B 5/22, B32B 5/26, B32B 15/14, F16L 59/02

(54) **UMFORMBARES HALBZEUG ZUR FERTIGUNG EINES KONTURTREUEN KÖRPERS ZUR HOCHTEMPERATURISOLIERUNG**
A FORMABLE SEMI-FINISHED PRODUCT FOR PRODUCING A BODY WITH HIGH-PRECISION CONTOUR FOR HIGH-TEMPERATURE INSULATION
DEMI-PRODUIT DÉFORMABLE POUR LA FABRICATION D'UN CORPS CONTOURNÉ POUR L'ISOLATION À HAUTE TEMPÉRATURE

(43) Veröffentlichungstag der Anmeldung: 29.10.2025
(73) Patentinhaber: tmax Holding GmbH, 68169 Mannheim (DE)
(72) Erfinder: Baum, Armin, 64668 Rimbach (DE)
(74) Vertreter: Wesch, Arno

(56) Entgegenhaltungen:
- EP-A1- 3 418 534
- WO-A1-2022/122046
- US-A- 5 874 150

## Beschreibung

Die Erfindung betrifft einen konturtreuen Körper zur Hochtemperaturisolierung nach dem Oberbegriff des Anspruchs 1.

Ein solcher Körper, der Beton ummanteln soll, ist aus der US 5,874,150 A bekannt. Aus der WO 2022/122046 A1 ist eine thermisch isolierende Isolierverbundplatte bekannt geworden.

Es ist bereits bekannt, Maschinenteile mit konturtreuen Körpern zu umgeben, um Personen vor dem Kontakt mit heißen Maschinenteilen zu schützen. Vor diesem Hintergrund sei lediglich beispielhaft auf die EP 3 418 534 A1 verwiesen.

Es ist auch bekannt, mikroporöse Dämmstoffe zur Wärmeisolierung zu verwenden. Konkret ist bekannt, einzelne Segmente, die Dämmstoffe umfassen, über Eck zu verbinden und mittels eines Außenverbinders über Eck in Position zu halten, so dass eine Konturtreue des durch die Segmente erzeugten dreidimensionalen Körpers erhalten bleibt. Hierbei ist allerdings nachteilig, dass an den Bereichen, an denen die Segmente über Eck auf Stoss aneinander liegen, sogenannte Hotspots oder Heißstellen entstehen. Über die Hotspots oder Heißstellen kann die Temperatur nach außen entweichen und zu unerwünschten Oberflächentemperaturen führen, oder die Effizienz des Systems nachteilig beeinflussen. Weiter ist nachteilig, dass mikroporöse Dämmstoffe, die bis 1200 °C temperaturstabil sind, leicht zum Brechen neigen, so dass an Knickstellen oder "Über-Eck-Stellen" die vorgenannten Hotspots auftreten.

Der Erfindung liegt vor diesem Hintergrund die Aufgabe zugrunde, ein Halbzeug anzugeben, mit welchem ein formstabiler, konturtreuer dreidimensionaler Körper zur zuverlässigen Hochtemperaturisolierung möglichst leicht erzeugbar ist.

Die vorliegende Erfindung löst die genannte Aufgabe durch die Merkmale des Anspruchs 1.

Erfindungsgemäß ist zunächst erkannt worden, dass mikroporöse Dämmstoffe leicht brechen und/oder zerbröseln und daher gerade in Eckbereichen nicht gut geknickt werden können. Darauf ist erkannt worden, dass zwei äußere Lagen, welche den Dämmstoff einschließen, miteinander an mindestens einer Naht miteinander vernäht werden können. Indem das Nahtmaterial sowohl die beiden äußeren Lagen als auch den Dämmstoff durchsetzt, wird eine definierte Knick-oder Faltlinie geschaffen, in welcher der Dämmstoff stark verdichtet ist. Die starke Verdichtung verhindert einen Bruch des Dämmstoffs oder reduziert erheblich die Gefahr eines freien Bruchs bzw. dessen Folgen. Allenfalls findet ein durch die Naht definierter Bruch statt. Hierdurch wird erfindungsgemäß erreicht, dass in Eckbereichen gerade keine Hotspots oder Heißstellen entstehen, weil stets ausreichend Dämmstoff im Bereich der Naht vorhanden ist. Überdies stellen Nähte sicher, dass der Dämmstoff innerhalb der Lagen nicht verrutscht, das Halbzeug eine hohe Eigenfestigkeit zeigt und eine hohe Formstabilität aufweist.

Durch die Naht könnte eine Knick- oder Faltlinie des Halbzeugs erzeugt werden, an welcher zwei relativ zueinander bewegliche Segmente des Halbzeugs aneinander so angebunden sind, dass mindestens eines der Segmente aus einer mit mindestens einem anderen Segment gemeinsamen Ebene herausschwenkbar oder umschlagbar ist. Hierdurch ist es möglich, aus einem flächigen, im Wesentlichen in einer Ebene liegenden Halbzeug, einen dreidimensionalen Körper zu bilden. Bevorzugt ist kein Werkzeug erforderlich, um aus dem flächigen Halbzeug einen dreidimensionalen Körper zu bilden.

Das Halbzeug weist mehrere Segmente auf, die durch Nähte erzeugt sind, die zumindest abschnittsweise als Knick- oder Faltlinien für die Segmente dienen. Hierdurch kann ein Halbzeug eine Vielzahl von zusammenhängenden Segmenten aufweisen, die durch definiertes Falten oder Umbiegen einen dreidimensionalen Körper bilden.

An mindestens einem Segment könnte ein Befestigungsmittel angeordnet sein, welches mit einem zweiten Befestigungsmittel oder direkt mit einem anderen Segment so verbindbar ist, dass eine umgeschlagene, umgebogene und/ oder gewinkelte Stellung des Segments in Bezug auf ein anderes Segment oder einen Restbereich des Halbzeugs erhalten bleibt. Hierdurch wird sichergestellt, dass ein Rückstellverhalten eines umgeschlagenen oder umgebogenen Segments verhindert wird. Die Befestigungsmittel könnten Druckknöpfe, Klettverschlüsse, Laschen mit Schrauben und Muttern oder ähnliche Mittel umfassen. Denkbar ist auch, einen Gürtel zu verwenden, der durch Schlaufen läuft und eine Form des Körpers erhält. Bevorzugt sind die Befestigungsmittel händisch ohne Werkzeuge miteinander verbindbar.

Der Dämmstoff könnte ein Pulvermaterial, ein Fasermaterial oder eine gepresste Platte umfassen. Insbesondere könnte der Dämmstoff mikroporös sein. Alle diese Werkstoffe haben sich als sehr gut geeignet erwiesen, in der Hochtemperaturisolierung bis 1200 °C eingesetzt zu werden. Durch die Kombination mit äußeren Lagen, die miteinander vernäht sind, ist eine Kapselung dieser thermisch zwar stabilen, aber häufig leicht brüchigen, Werkstoffe zwischen zwei Lagen erfolgreich realisierbar. An sich brüchige Materialien können in Eckbereichen zur Hochtemperaturisolierung eingesetzt werden.

Mindestens eine äußere Lage könnte als Gewebe, Gestrick, Gewirke oder Gelege ausgestaltet sein. Solche Lagen können mit einem Garn miteinander vernäht werden und sind ausreichend flexibel und biegbar. Konkret ist denkbar, die äußeren Lagen edelstahlverstärkt oder mit einer anderweitig geeigneten Beschichtung (Aluminium, Silikon, PTFE, etc.) auszugestalten. Alternativ oder zusätzlich könnte mindestens eine äußere Lage textilartig und/ oder drapierbar sein. Hierdurch sind die Lagen leicht biegbar und flexibel formbar.

Zwischen mindestens einer äußeren Lage und dem Dämmstoff könnte eine Innenlage angeordnet sein. Als Innenlage könnte eine Glasfaser-Matte, ein Gewebe, Gestrick oder Gewirke verwendet werden. Hierdurch wird der Dämmstoff besonders gut stabilisiert.

Die Naht könnte als Steppnaht ausgestaltet sein. Eine Versteppung von Lagen mit einem Garn ist industriell gut durchführbar. Die entstehende Naht ist äußerst stabil. Alternativ oder zusätzlich könnte das Garn hochtemperaturstabil sein. Hierdurch ist der aus dem Halbzeug gebildete dreidimensionale Körper thermisch langzeitstabil und erhält sehr lange seine Form unter Vermeidung von Hotspots oder Heißstellen.

Das Halbzeug könnte eine Flächigkeit oder einen Zusammenhang mehrerer Segmente zeigen, welche bzw. welcher eine Ausbreitung des Halbzeugs in einer schmalen Arbeitsebene und eine Stapelung mehrerer solcher Halbzeuge übereinander zulässt. Hierdurch zeigt das Halbzeug eine gute Lagerfähigkeit.

Ein dreidimensionaler Körper zur Hochtemperaturisolierung von sich dreidimensional erstreckenden Maschinen, Motoren oder Maschinenteilen ist aus einem, insbesondere flächigen, Halbzeug der hier beschriebenen Art durch Umschlagen und/ oder Umbiegen von Segmenten des Halbzeugs zum Erhalt der dreidimensionalen Kontur des Körpers gebildet. Hierdurch kann durch das Halbzeug eine Art maßgeschneiderter Mantel für die Maschine, den Motor oder das Maschinenteil geschaffen werden, wobei der Mantel die Außenkontur der Maschine, des Motors oder des Maschinenteils so nachbildet, dass möglichst wenig Hotspots oder Heißstellen entstehen.

Eine Anordnung könnte eine Maschine, einen Motor oder ein Maschinenteil und einen Körper der zuvor beschriebenen Art umfassen, wobei der Körper der Außenkontur der Maschine, des Motors oder des Maschinenteils grob so folgt, dass die Maschine, der Motor oder das Maschinenteil im Bereich 100 °C - 1200 °C hochtemperaturisoliert ist. Die dreidimensionalen Umrisse der Maschine, des Motors oder des Maschinenteils können durch CAD-Technik erfasst werden, und es kann ein Schnitt und ein Nähmuster für ein Halbzeug erzeugt werden, welches den Umrissen der Maschine, des Motors oder des Maschinenteils möglichst passgenau folgt. Es fällt hierbei wenig Verschnitt an, und der zu isolierende Gegenstand ist nahezu ohne Hotspots oder Heißstellen in Eck- oder Biegebereichen thermisch isoliert.

In der Zeichnung zeigen
- Fig. 1: eine perspektivische Ansicht eines flächigen Halbzeugs, welches aus mehreren Segmenten aufgebaut ist, die alle im Wesentlichen in einer Ebene liegen,
- Fig. 2: eine perspektivische Ansicht des Halbzeugs gemäß Fig. 1 auf die Seite, die der in Fig. 1 gezeigten gegenüberliegt,
- Fig. 3: eine perspektivische Ansicht des Halbzeugs gemäß Fig. 1 und 2, welches in einen dreidimensionalen konturtreuen Körper gefaltet ist,
- Fig. 4: eine perspektivische Ansicht der Rückseite des Körpers gemäß Fig. 3,
- Fig. 5: in der oberen Ansicht einen Faltbereich des Halbzeugs vor dem Falten und in der unteren Ansicht den Faltbereich nach dem Falten, wobei dargestellt ist, dass der Dämmstoff gerade im Falt- oder Eckbereich stark verdichtet vorliegt, und
- Fig. 6: eine schematische Ansicht eines gefalteten Halbzeugs, welches zwei Innenlagen aufweist und durch einen Gürtel in Form gehalten wird.

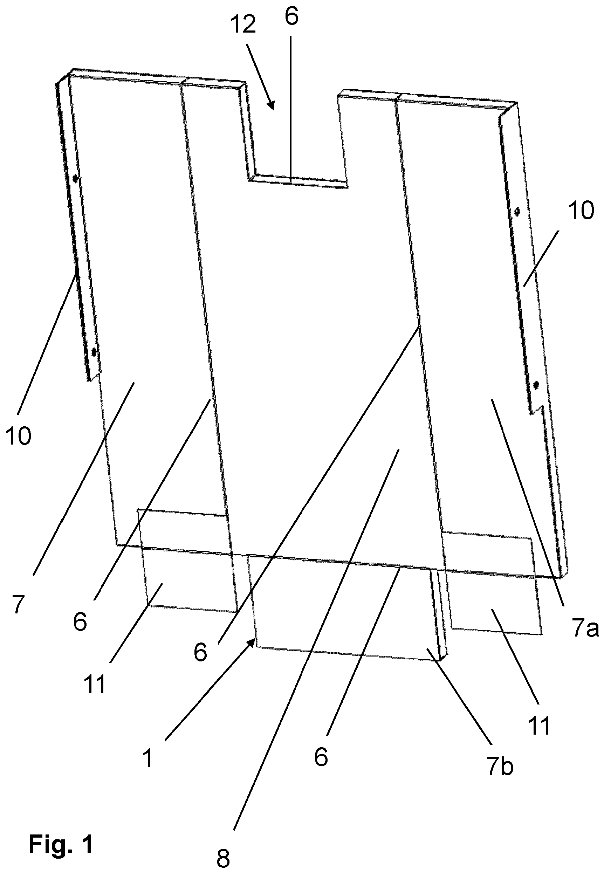

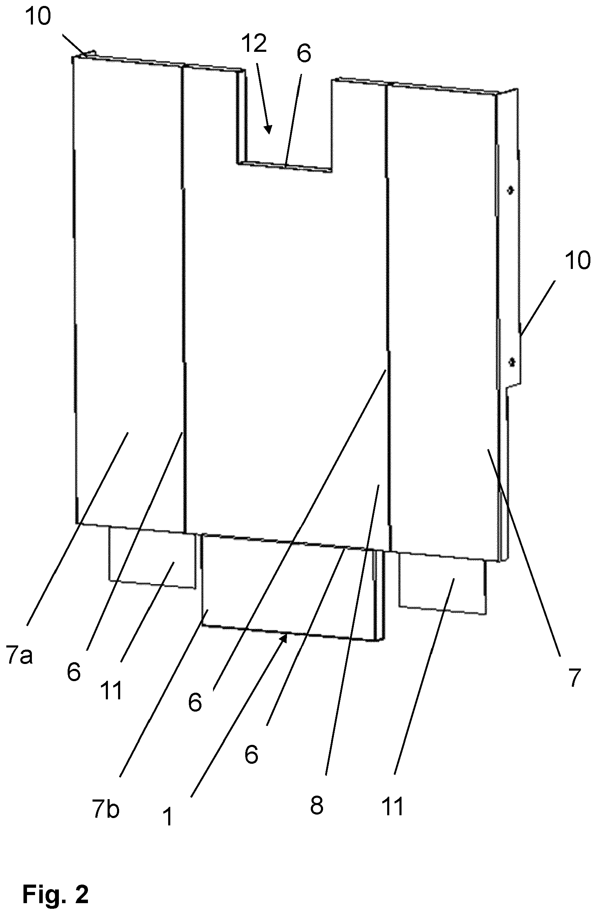

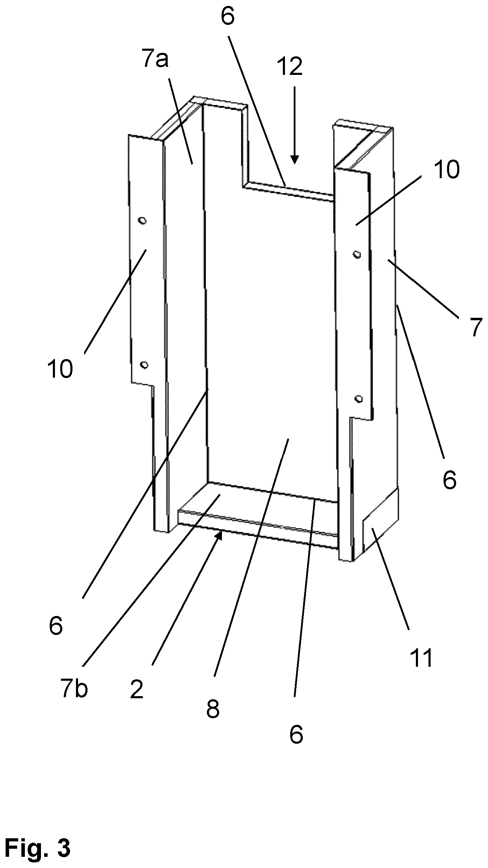

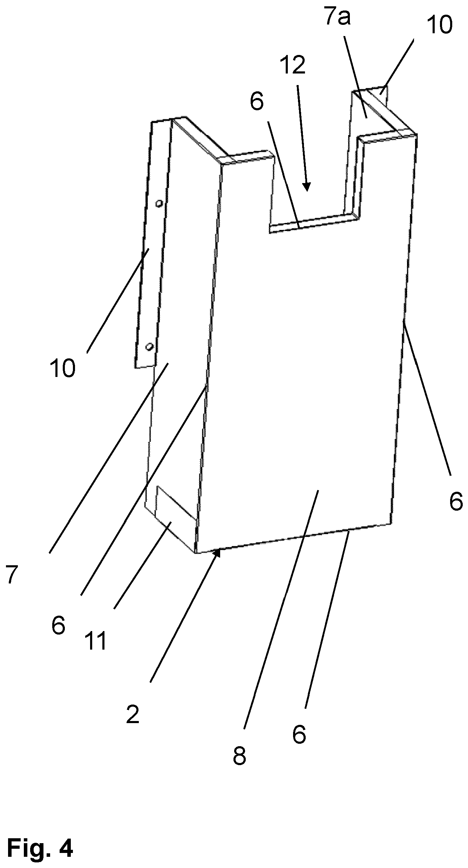

Fig. 1 und 2 zeigen ein Halbzeug 1 zur Herstellung eines konturtreuen dreidimensionalen Körpers 2 gemäß Fig. 3 und 4 zur Hochtemperaturisolierung im Bereich 100 °C bis 1200 °C.

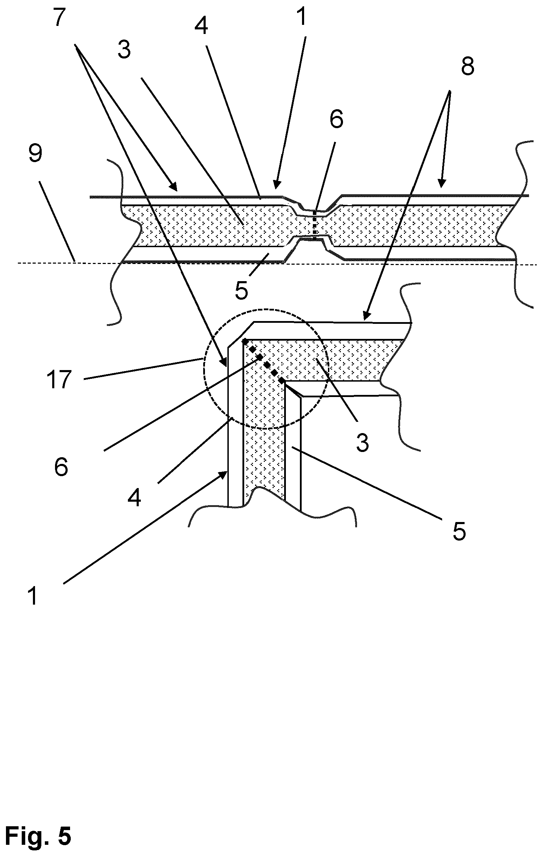

Fig. 5 zeigt schematisch, dass das Halbzeug 1 einen Dämmstoff 3 umfasst, der zwischen mindestens zwei äußeren flächigen Lagen 4, 5 angeordnet ist. Die beiden äußeren Lagen 4, 5 sind miteinander an mindestens einer Naht 6 miteinander vernäht, indem das Nahtmaterial sowohl die beiden äußeren Lagen 4, 5 als auch den Dämmstoff 3 durchsetzt. Die beiden äußeren Lagen 4, 5 schließen den Dämmstoff 3 zwischen sich ein und kapseln diesen. Der Dämmstoff 3 ist sandwichartig zwischen den beiden äußeren Lagen 4, 5 aufgenommen.

Fig. 5 zeigt in der unteren Ansicht, dass durch die Naht 6 eine Knick- oder Faltlinie des Halbzeugs 1 erzeugt ist, an welcher zwei relativ zueinander bewegliche Segmente 7, 8 des Halbzeugs 1 aneinander so angebunden sind, dass mindestens eines der Segmente 7 aus einer mit mindestens einem anderen Segment 8 gemeinsamen Ebene 9 herausschwenkbar oder umschlagbar ist.

Das Halbzeug 1 gemäß Fig. 1 und 2 weist mehrere Segmente 7, 7a, 7b, 8 auf, die durch Nähte 6 erzeugt sind, die zumindest abschnittsweise als Knick- oder Faltlinien für die Segmente 7, 7a, 7b dienen.

An mindestens einem Segment 7, 7a ist ein Befestigungsmittel 11 angeordnet, welches direkt mit einem anderen Segment 7b so verbindbar ist, dass eine umgeschlagene, umgebogene und/ oder gewinkelte Stellung des Segments 7, 7a in Bezug auf ein anderes Segment 8 oder einen Restbereich des Halbzeugs 1 erhalten bleibt. Das Befestigungsmittel 11 ist hier als Klettband ausgestaltet, das nach Art von Haken und Schlaufe mit einer äußeren Lage 4 verbindbar ist. Konkret sind an zwei Segmenten 7, 7a Befestigungsmittel 11 angeordnet. Jedes Segment 7, 7a weist als Befestigungsmittel 11 ein Klettband auf.

Fig. 5 zeigt schematisch, dass der Dämmstoff 3 ein Pulvermaterial, ein Fasermaterial und/ oder eine gepresste Platte umfasst. Konkret ist der Dämmstoff 3 als mikroporöser Dämmstoff ausgestaltet, der bis 1200 °C thermisch stabil ist.

Fig. 5 zeigt weiter schematisch, dass mindestens eine äußere Lage 4, 5 als Gewebe, Gestrick, Gewirke, Gelege Lage ausgestaltet ist. Mindestens eine äußere Lage 4, 5 ist textilartig.

In dem in Fig. 5 gezeigten Eckbereich 17, der durch einen gestrichelten Kreis dargestellt ist, tritt kein Hotspot bzw. keine Heißstelle auf und es treten keine unerwünschten Effizienzverluste bzw. unzulässige Oberflächentemperaturen auf.

Jede in Fig. 1 bis 6 gezeigte Naht 6 ist als Steppnaht ausgestaltet und das für die jeweilige Naht 6 verwendete Garn ist hochtemperaturstabil.

Die Fig. 1 bis 4 zeigen des Weiteren, dass in einem Segment 8 ein Hinterschnitt 12 in Form einer Ausnehmung geschaffen ist, welcher durch eine Naht 6 abgesetzt ist. An diesem Hinterschnitt 12 ist sichergestellt, dass kein Dämmstoff 3 nach außen ausdringen kann.

Das Halbzeug 1 gemäß Fig. 1 und 2 ist gekennzeichnet durch eine Flächigkeit und einen Zusammenhang mehrerer Segmente 7, 7a, 7b, 8, welche bzw. welcher eine Ausbreitung des Halbzeugs 1 in einer schmalen Arbeitsebene und eine Stapelung mehrerer solcher Halbzeuge übereinander zulässt.

Fig. 3 und 4 zeigen jeweils einen dreidimensionalen Körper 2 zur Hochtemperaturisolierung von sich dreidimensional erstreckenden Maschinen, Motoren oder Maschinenteilen, wobei der Körper 2 aus einem Halbzeug 1 gemäß Fig. 1 und 2 durch Umschlagen und/ oder Umbiegen von Segmenten 7, 7a, 7b des Halbzeugs 1 zum Erhalt der dreidimensionalen Kontur des Körpers 2 gebildet ist. Die als Klettbänder ausgebildeten Befestigungsmittel 11 an den Segmenten 7, 7a sind mit dem Segment 7b verbunden.

Eine Anordnung könnte eine Maschine, einen Motor oder ein Maschinenteil und einen Körper 2 nach Fig. 3 und 4 umfassen, wobei der Körper 2 der Außenkontur der Maschine, des Motors oder des Maschinenteils grob so folgt, dass die Maschine, der Motor oder das Maschinenteil im Bereich 100 °C - 1200 °C hochtemperaturisoliert ist.

An den Segmenten 7, 7a ist im Bereich einer Art Einschuböffnung des fertigen Körpers 2 jeweils ein Flansch 10 angeordnet, der mit Durchgängen versehen ist. Hierdurch kann der Körper 2 mit weiteren Komponenten verbunden werden.

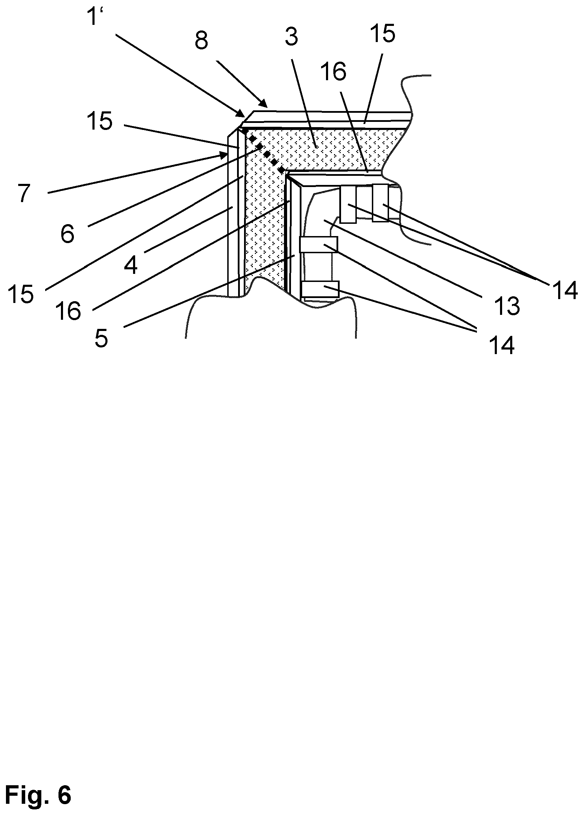

Fig. 6 zeigt anhand einer weiteren Ausgestaltung eines weiteren Halbzeugs 1', dass zwischen einer ersten äußeren Lage 4 und dem Dämmstoff 3 eine erste Innenlage 15 angeordnet ist. Fig. 6 zeigt weiter, dass zwischen einer zweiten äußeren Lage 5 und dem Dämmstoff 3 eine zweite Innenlage 16 angeordnet ist. Die äußeren Lagen 4, 5, die Innenlagen 15, 16 und der Dämmstoff 3 werden von der Naht 6 durchsetzt. Die Innenlagen 15, 16 sind als Fasermatten ausgestaltet.

Unabhängig von der gezeigten Ausgestaltung mit Innenlagen 15, 16 zeigt Fig. 6 weiter, dass die Rückstellung eines umgeschlagenen oder umgebogenen Segments 7 durch einen Gürtel 13 verhindert werden kann, welcher straff und unter Spannung durch Schlaufen 14 geführt ist, die an der zweiten äußeren Lage 5 angeordnet sind. Insoweit können Befestigungsmittel auch Gürtel 13 und Schlaufen 14 umfassen.

### Bezugszeichenliste

- 1, 1': Halbzeug
- 2: Körper gebildet aus 1
- 3: Dämmstoff
- 4: erste äußere Lage
- 5: zweite äußere Lage
- 6: Naht
- 7: erstes Segment
- 7a: zweites Segment
- 7b: drittes Segment
- 8: viertes Segment
- 9: gemeinsame Ebene von 7, 7a, 7b und 8
- 10: Flansch an 7, 7a
- 11: Befestigungsmittel an 7, 7a
- 12: Hinterschnitt in 8
- 13: Gürtel
- 14: Schlaufe
- 15: erste Innenlage
- 16: zweite Innenlage
- 17: Eckbereich

## Patentansprüche

1. Dreidimensionaler Körper (2) zur Hochtemperaturisolierung im Bereich 100 °C bis 1200 °C von sich dreidimensional erstreckenden Maschinen, Motoren oder Maschinenteilen, wobei der Körper (2) aus einem Halbzeug (1, 1') durch Umschlagen und/ oder Umbiegen von Segmenten (7, 7a, 7b, 8) des Halbzeugs (1) zum Erhalt der dreidimensionalen Kontur des Körpers (2) gebildet ist, wobei das Halbzeug (1, 1') einen Dämmstoff (3) umfasst, der zwischen mindestens zwei äußeren flächigen Lagen (4, 5) angeordnet ist, und wobei die beiden äußeren Lagen (4, 5) miteinander an mindestens einer Naht (6) miteinander vernäht sind, indem das Nahtmaterial sowohl die beiden äußeren Lagen (4, 5) als auch den Dämmstoff (3) durchsetzt, **dadurch gekennzeichnet, dass** das Halbzeug (1) mehrere Segmente (7, 7a, 7b, 8) aufweist, die durch Nähte (6) erzeugt sind, die zumindest abschnittsweise als Knick- oder Faltlinien für die Segmente (7, 7a, 7b) dienen.

2. Dreidimensionaler Körper nach Anspruch 1, **dadurch gekennzeichnet, dass** durch die Naht (6) eine Knick- oder Faltlinie des Halbzeugs (1) erzeugt ist, an welcher zwei relativ zueinander bewegliche Segmente (7, 7a, 7b, 8) des Halbzeugs (1) aneinander so angebunden sind, dass mindestens eines der Segmente (7, 7a, 7b) aus einer mit mindestens einem anderen Segment (8) gemeinsamen Ebene (9) herausschwenkbar oder umschlagbar ist.

3. Dreidimensionaler Körper nach einem der voranstehenden Ansprüche, **dadurch gekennzeichnet, dass** an mindestens einem Segment (7, 7a) ein Befestigungsmittel (11) angeordnet ist, welches mit einem zweiten Befestigungsmittel oder direkt mit einem anderen Segment (7b) so verbindbar ist, dass eine umgeschlagene, umgebogene und/ oder gewinkelte Stellung des Segments (7, 7a, 7b) in Bezug auf ein anderes Segment (8) oder einen Restbereich des Halbzeugs (1) erhalten bleibt.

4. Dreidimensionaler Körper nach einem der voranstehenden Ansprüche, **dadurch gekennzeichnet, dass** der Dämmstoff (3) ein Pulvermaterial, ein Fasermaterial und/ oder eine gepresste Platte umfasst.

5. Dreidimensionaler Körper nach einem der voranstehenden Ansprüche, **dadurch gekennzeichnet, dass** mindestens eine äußere Lage (4, 5) als Gewebe, Gestrick, Gewirke oder Gelege ausgestaltet ist und/ oder dass mindestens eine äußere Lage (4, 5) textilartig und/ oder drapierbar ist.

6. Dreidimensionaler Körper nach einem der voranstehenden Ansprüche, **dadurch gekennzeichnet, dass** zwischen mindestens einer äußeren Lage (4, 5) und dem Dämmstoff (3) eine Innenlage (15, 16) angeordnet ist.

7. Dreidimensionaler Körper nach einem der voranstehenden Ansprüche, **dadurch gekennzeichnet, dass** die Naht (6) als Steppnaht ausgestaltet ist und/ oder dass das Garn für die Naht (6) hochtemperaturstabil ist.

8. Dreidimensionaler Körper nach einem der voranstehenden Ansprüche, **gekennzeichnet durch** eine Flächigkeit oder einen Zusammenhang mehrerer Segmente (7, 7a, 7b, 8), welche bzw. welcher eine Ausbreitung des Halbzeugs (1) in einer schmalen Arbeitsebene und eine Stapelung mehrerer solcher Halbzeuge (1) übereinander zulässt.

9. Anordnung, umfassend eine Maschine, einen Motor oder ein Maschinenteil und einen Körper (2) nach einem der voranstehenden Ansprüche, wobei der Körper (2) der Außenkontur der Maschine, des Motors oder des Maschinenteils grob so folgt, dass die Maschine, der Motor oder das Maschinenteil im Bereich 100 °C - 1200 °C hochtemperaturisoliert ist.

## Claims

1. Three-dimensional body (2) for high-temperature insulation ranging from 100 °C to 1200 °C of machines, motors or machine parts extending three-dimensionally, wherein the body (2) is formed from a semi-finished product (1, 1') by folding and/or bending segments (7, 7a, 7b, 8) of the semi-finished product (1) to obtain the three-dimensional contour of the body (2), wherein the semi-finished product (1, 1') comprises an insulating material (3) which is arranged between at least two outer two-dimensional layers (4, 5) and wherein the two outer layers (4, 5) are sewn together on at least one seam (6) by the seam material passing through both the two outer layers (4, 5) and the insulating material (3), **characterized in that** the semi-finished product (1) has a plurality of segments (7, 7a, 7b, 8) which are generated by seams (6) which serve at least in some portions as crease lines or fold lines for the segments (7, 7a, 7b).

2. Three-dimensional body according to Claim 1, **characterized in that** a crease line or fold line of the semi-finished product (1) is generated by the seam (6), at which crease line or fold line two segments (7, 7a, 7b, 8) of the semi-finished product (1) which are movable relative to one another are attached to one another such that at least one of the segments (7, 7a, 7b) can be pivoted or folded out of a plane (9) common to at least one further segment (8).

3. Three-dimensional body according to one of the preceding claims, **characterized in that** a fastening means (11), which can be connected to a second fastening means or directly to a further segment (7b), is arranged on at least one segment (7, 7a) such that a folded, bent and/or angled position of the segment (7, 7a, 7b) is maintained relative to a further segment (8) or a remaining region of the semi-finished product (1).

4. Three-dimensional body according to one of the preceding claims, **characterized in that** the insulating material (3) comprises a powder material, a fibrous material and/or a pressed board.

5. Three-dimensional body according to one of the preceding claims, **characterized in that** at least one outer layer (4, 5) is designed as a woven fabric, knitted fabric, warp-knitted fabric or non-woven fabric and/or that at least one outer layer (4, 5) is in the manner of a textile and/or drapeable.

6. Three-dimensional body according to one of the preceding claims, **characterized in that** an inner layer (15, 16) is arranged between at least one outer layer (4, 5) and the insulating material (3).

7. Three-dimensional body according to one of the preceding claims, **characterized in that** the seam (6) is designed as a lockstitch seam and/or that the yarn for the seam (6) is stable at high temperatures.

8. Three-dimensional body according to one of the preceding claims, **characterized by** a two-dimensionality or an interconnection of a plurality of segments (7, 7a, 7b, 8) which enables the semi-finished product (1) to be spread out in a narrow working plane and a plurality of such semi-finished products (1) to be stacked one above the other.

9. Arrangement comprising a machine, a motor or a machine part and a body (2) according to one of the preceding claims, wherein the body (2) roughly follows the outer contour of the machine, the motor or the machine part, such that the machine, the motor or the machine part is insulated at high temperatures ranging from 100 °C - 1200 °C.

## Revendications

1. Corps tridimensionnel (2) pour l'isolation contre les températures élevées dans la plage de 100°C à 1200°C de machines, moteurs ou pièces de machine s'étendant de manière tridimensionnelle, le corps (2) étant formé à partir d'un produit semi-fini (1, 1') par retournement et/ou cintrage de segments (7, 7a, 7b, 8) du produit semi-fini (1) en vue de l'obtention du contour tridimensionnel du corps (2), le produit semi-fini (1, 1') comprenant un matériau isolant (3) qui est agencé entre au moins deux couches (4, 5) planes externes et les deux couches (4, 5) externes étant cousues l'une à l'autre au niveau d'au moins une couture (6), le matériau de la couture passant tant à travers les deux couches (4, 5) externes qu'à travers le matériau isolant (3), **caractérisé en ce que** le produit semi-fini (1) présente plusieurs segments (7, 7a, 7b, 8) qui sont générés par des coutures (6), qui servent au moins par sections de lignes de pliage ou de plissage pour les segments (7, 7a, 7b).

2. Corps tridimensionnel selon la revendication 1, **caractérisé en ce qu'**une ligne de pliage ou de plissage du produit semi-fini (1) est générée par la couture (6), au niveau de laquelle deux segments (7, 7a, 7b, 8) mobiles l'un par rapport à l'autre du produit semi-fini (1) sont reliés l'un à l'autre de telle sorte qu'au moins l'un des segments (7, 7a, 7b) peut être pivoté ou retourné hors d'un plan (9) commun avec au moins un autre segment (8).

3. Corps tridimensionnel selon l'une des revendications précédentes, **caractérisé en ce qu'**un moyen de fixation (11) est agencé au niveau d'au moins un segment (7, 7a), lequel moyen de fixation peut être relié à un deuxième moyen de fixation ou directement à un autre segment (7b) de telle sorte qu'une position retournée, repliée et/ou coudée du segment (7, 7a, 7b) par rapport à un autre segment (8) ou à une zone résiduelle du produit semi-fini (1) est conservée.

4. Corps tridimensionnel selon l'une des revendications précédentes, **caractérisé en ce que** le matériau isolant (3) comprend un matériau en poudre, un matériau fibreux et/ou une plaque pressée.

5. Corps tridimensionnel selon l'une des revendications précédentes, **caractérisé en ce qu'**au moins une couche (4, 5) externe est réalisée sous forme de tissu, de tricot, de tissu maille ou de nappe et/ou **en ce qu'**au moins une couche (4, 5) externe est de type textile et/ou de type drapé.

6. Corps tridimensionnel selon l'une des revendications précédentes, **caractérisé en ce qu'**une couche (15, 16) interne est agencée entre au moins une couche (4, 5) externe et le matériau isolant (3).

7. Corps tridimensionnel selon l'une des revendications précédentes, **caractérisé en ce que** la couture (6) est conçue comme une surpiqûre et/ou **en ce que** le fil pour la couture (6) est stable aux températures élevées.

8. Corps tridimensionnel selon l'une des revendications précédentes, **caractérisé par** une planéité ou une liaison de plusieurs segments (7, 7a, 7b, 8) qui admet une expansion du produit semi-fini (1) dans un plan de travail étroit et un empilement de plusieurs de ces produits semi-finis (1) les uns sur les autres.

9. Agencement, comprenant une machine, un moteur ou une pièce de machine et un corps (2) selon l'une des revendications précédentes, le corps (2) suivant grossièrement le contour externe de la machine, du moteur ou de la pièce de machine de telle sorte que la machine, le moteur ou la pièce de machine est isolée contre les températures élevées dans la plage de 100°C - 1200°C.
